(19) Europäisches Patentamt
European Patent Office
Office européen des brevets

(11) **EP 3 771 894 B1**

(12) **EUROPÄISCHE PATENTSCHRIFT**

(45) Veröffentlichungstag und Bekanntmachung des Hinweises auf die Patenterteilung:
**18.05.2022 Patentblatt 2022/20**

(21) Anmeldenummer: **20183669.9**

(22) Anmeldetag: **02.07.2020**

(51) Internationale Patentklassifikation (IPC):
**G01J 5/00** (2022.01)  **H05B 6/06** (2006.01)

(52) Gemeinsame Patentklassifikation (CPC):
**G01J 5/0037; G01J 5/802**

(54) **VORRICHTUNG UND VERFAHREN ZUR ERMITTLUNG DER TEMPERATUR DES INHALTS EINES BEHÄLTERS**

DEVICE AND METHOD FOR DETERMINING THE TEMPERATURE OF THE CONTENTS OF A CONTAINER

DISPOSITIF ET PROCÉDÉ DE DÉTERMINATION DE LA TEMPÉRATURE DU CONTENU D'UN RÉCIPIENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.07.2019 DE 102019211292**

(43) Veröffentlichungstag der Anmeldung:
**03.02.2021 Patentblatt 2021/05**

(73) Patentinhaber: **BSH Hausgeräte GmbH**
**81739 München (DE)**

(72) Erfinder:
• **Mrak, Peter**
**2382 Mislinja (SI)**
• **Amon, Matej**
**3332 Recica ob Savinji (SI)**
• **Florjanic, Blaz**
**1231 Ljubljana-Crnuce (SI)**

(56) Entgegenhaltungen:
**EP-A1- 3 420 864     JP-A- 2011 249 065**
**JP-A- 2011 253 781**

**Beschreibung**

Die Erfindung betrifft eine Vorrichtung und ein entsprechendes Verfahren zur Ermittlung der Temperatur des Inhalts eines Behälters, insbesondere des Inhalts des Behälters eines Hausgeräts.

Ein Hausgerät, insbesondere eine Küchenmaschine, umfasst einen Behälter, in dem ein Inhalt, z.B. ein Nahrungsmittel, aufgenommen werden können, um den Inhalt innerhalb des Behälters zu ver- bzw. bearbeiten. Im Rahmen der Bearbeitung des Inhalts kann eine Temperierung (insbesondere ein Kühlen oder ein Erhitzen bzw. Aufwärmen) des Inhalts erfolgen. In diesem Zusammenhang kann es erforderlich sein, einen Schätzwert der Temperatur des Inhalts zu ermitteln (z.B. um die Temperatur des Inhalts auf einen bestimmten Sollwert einzustellen). JP 2011 249065 A beschreibt einen Induktionskocher mit einem Infrarot-Sensor. JP 2011 253781 A beschreibt ein Kochfeld mit einem Infrarot-Sensor. EP 3 420 864 A1 beschreibt ein Zusatzteil für eine Küchenmaschine.

Das vorliegende Dokument befasst sich mit der technischen Aufgabe, in effizienter und präziser Weise die Temperatur des Inhalts eines Behälters, insbesondere eines Nahrungsmittels in einem Behälter, zu ermitteln.

Die Aufgabe wird jeweils durch den Gegenstand der unabhängigen Patentansprüche gelöst. Vorteilhafte Ausführungsformen sind insbesondere in den abhängigen Patentansprüchen definiert, in nachfolgender Beschreibung beschrieben oder in der beigefügten Zeichnung dargestellt.

Gemäß einem Aspekt der Erfindung wird eine Vorrichtung zur Ermittlung eines Schätzwertes der (Inhalts-) Temperatur $T_I$ des Inhalts eines Behälters beschrieben. Der Behälter und/oder die Vorrichtung können Teil eines Hausgeräts sein. Der ermittelte Schätzwert der Inhalts-Temperatur $T_I$ kann dann dazu verwendet werden, einen zuverlässigen und präzisen Betrieb des Hausgeräts zu ermöglichen.

Die Vorrichtung umfasst einen Behälter mit einer den Inhalt zumindest teilweise umschließenden Behälter-Wand. Der Behälter kann z.B. aus einem Kunststoff und/oder aus Glas und/oder aus einem Metall (z.B. Edelstahl) bestehen. Die Behälter-Wand kann eine bestimmte Dicke bzw. Stärke aufweisen.

Des Weiteren umfasst die Vorrichtung einen Infrarot (IR)-Sensor, der auf die Behälter-Wand gerichtet ist, und der eingerichtet ist, Sensordaten in Bezug auf die (Wand-) Temperatur Tw der Behälter-Wand zu erfassen. Der IR-Sensor ist dabei bevorzugt außerhalb des Behälters angeordnet (um zu gewährleisten, dass der IR-Sensor nicht durch den Inhalt des Behälters verschmutzt wird). Insbesondere kann der IR-Sensor eingerichtet sein, Sensordaten in Bezug auf die Intensität von Strahlung im Infrarot-Spektralbereich zu erfassen, die von der Behälter-Wand ausgeht. Mit anderen Worten, der IR-Sensor kann eingerichtet sein, Sensordaten in Bezug auf die Emission von InfrarotStrahlung der Behälter-Wand zu erfassen.

Außerdem umfasst die Vorrichtung eine Recheneinheit (z.B. einen Mikroprozessor), die eingerichtet ist, anhand der Sensordaten und anhand von Korrekturdaten den Schätzwert der Inhalts-Temperatur $T_I$ des Inhalts des Behälters zu ermitteln. Durch die Berücksichtigung von Korrekturdaten kann in effizienter und präziser Weise ein Schätzwert der Inhalts-Temperatur $T_I$ ermittelt werden.

Die Korrekturdaten können dabei experimentell im Vorfeld ermittelt worden sein. Des Weiteren können die Korrekturdaten auf einer Speichereinheit der Vorrichtung gespeichert sein (und somit durch einen Speicherzugriff für die Recheneinheit zugänglich sein). Die Korrekturdaten können ausgebildet sein, einen (auf Basis der Sensordaten ermittelten) Schätzwert der Wand-Temperatur Tw der Behälter-Wand zu korrigieren (insbesondere zu skalieren und/oder zu verschieben), um einen präzisen Schätzwert der Inhalts-Temperatur $T_I$ des Inhalts des Behälters bereitzustellen.

Die Recheneinheit der Vorrichtung kann eingerichtet sein, einen Emissionsgrad der Behälter-Wand anhand der Korrekturdaten anzupassen, um einen angepassten Emissionsgrad zu ermitteln. Dabei können ggf. für unterschiedliche Typen von Behältern (z.B. aus unterschiedlichem Material und/oder mit einer unterschiedlichen Farbe der Behälter-Wand und/oder mit einer unterschiedlichen Stärke der Behälter-Wand) unterschiedliche Emissionsgrade (und/oder ggf. unterschiedliche Korrekturdaten bzw. Korrekturwerte) verwendet werden.

Die Korrekturdaten können zumindest einen Korrekturwert umfassen. Ggf. können für unterschiedliche Typen von Behältern unterschiedliche Korrekturwerte bereitgestellt werden. Die Recheneinheit kann eingerichtet sein, den Emissionsgrad der Behälter-Wand mit dem (ggf. Behälter-Typ-abhängigen) Korrekturwert zu verschieben und/oder zu skalieren. So kann in effizienter und präziser Weise ein angepasster Emissionsgrad bereitgestellt werden. Dabei wird der Emissionsgrad der Behälter-Wand durch den Korrekturwert typischerweise reduziert, so dass der angepasste Emissionsgrad typischerweise kleiner als der ursprüngliche Emissionsgrad der Behälter-Wand ist.

Der Schätzwert der Inhalts-Temperatur $T_I$ kann dann in präziser Weise anhand des angepassten Emissionsgrades ermittelt werden.

Insbesondere kann die Recheneinheit eingerichtet sein, den Schätzwert der Inhalts-Temperatur $T_I$ auf Basis des Berechnungs-Terms

$$\sqrt[4]{\frac{T_{raw\ sensor}^4 - (1-\varepsilon) \cdot T_{ambient}^4}{\varepsilon}}$$

zu ermitteln. Dabei ist $T_{raw\ sensor}$ eine durch die Sensordaten angezeigte Sensor-Temperatur Ts (die z.B. direkt aus den Sensordaten zu entnehmen ist). $T_{ambient}$ ist die Umfeld-Temperatur Tu der Umgebung des Behälters und $\varepsilon$ ist in dem o.g. Berechnungs-Term der angepasste Emissionsgrad. Der Schätzwert der Inhalts-Temperatur $T_I$ kann dem Wert des Berechnungs-Terms entsprechen. So kann der Schätzwert der Inhalts-Temperatur $T_I$ in besonders präziser Weise ermittelt werden.

Die Recheneinheit kann eingerichtet sein, einen Wert der (Umfeld-) Temperatur Tu der Umgebung des Behälters zu ermitteln. Ggf. kann ein Schätzwert (z.B. eine typische Raumtemperatur) für den Wert der Umfeld-Temperatur Tu angenommen werden. Alternativ kann die Vorrichtung einen Temperatursensor umfassen, der eingerichtet ist, Temperaturdaten in Bezug auf die Umfeld-Temperatur Tu zu erfassen. Der Schätzwert der Inhalts-Temperatur $T_I$ kann dann in präziser Weise (z.B. mittels des o.g. Berechnungs-Terms) auf Basis des Wertes der Umfeld-Temperatur Tu ermittelt werden.

Die Korrekturdaten können für unterschiedliche Werte der Sensor-Temperatur Ts unterschiedliche Korrekturwerte anzeigen. Dabei kann die Sensor-Temperatur Ts eine Temperatur sein, die allein auf Basis der Sensordaten ermittelt werden kann. Die Korrekturdaten (zur Ermittlung des Schätzwertes der Inhalts-Temperatur $T_I$) können im Vorfeld experimentell ermittelt worden sein.

Die Recheneinheit kann eingerichtet sein, (ggf. allein) auf Basis der von dem IR-Sensor erfassten Sensordaten einen Wert der Sensor-Temperatur Ts zu ermitteln. Des Weiteren kann auf Basis des ermittelten Wertes der Sensor-Temperatur Ts der Korrekturwert aus den Korrekturdaten ermittelt werden, mit dem der Schätzwert der Inhalts-Temperatur $T_I$ zu ermitteln ist. Durch die Berücksichtigung von temperatur-abhängigen Korrekturwerten kann die Genauigkeit des ermittelten Schätzwertes der Inhalts-Temperatur $T_I$ weiter erhöht werden.

Die Korrekturdaten können für unterschiedliche Typen von Inhalten (z.B. für unterschiedliche Typen von Flüssigkeiten und/oder Nahrungsmitteln) des Behälters unterschiedliche Korrekturwerte anzeigen. Diese Korrekturdaten können im Vorfeld experimentell ermittelt werden.

Die Recheneinheit kann eingerichtet sein, den Typ des Inhalts in dem Behälter zu ermitteln. Beispielsweise kann eine Anfrage an einen Nutzer der Vorrichtung erfolgen (z.B. über eine Benutzerschnittstelle), und der Typ des Inhalts kann auf Basis einer Antwort des Nutzers ermittelt werden. Alternativ oder ergänzend kann der Typ des Inhalts, insbesondere bei einer Küchenmaschine mit gespeicherten Rezeptdaten, auf Basis der Rezeptdaten für ein Nahrungsmittel ermittelt werden, das in der Küchenmaschine hergestellt wird.

Es kann dann auf Basis des ermittelten Typs des Inhalts des Behälters der Korrekturwert aus den Korrekturdaten ermittelt werden, mit dem der Schätzwert der Inhalts-Temperatur zu ermitteln ist. Durch die Berücksichtigung des Typs des Inhalts kann die Genauigkeit des ermittelten Schätzwertes der Inhalts-Temperatur $T_I$ weiter erhöht werden.

Die Recheneinheit kann eingerichtet sein, an einer Sequenz von Zeitpunkten eine entsprechende Sequenz von Sensordaten und basierend darauf eine entsprechende Sequenz von Schätzwerten der Inhalts-Temperatur $T_I$ zu ermitteln (z.B. periodisch, etwa mit einer Frequenz von 1Hz oder mehr). Es kann somit quasi-kontinuierlich die Inhalts-Temperatur $T_I$ des Inhalts des Behälters überwacht werden (z.B. um den Istwert der Inhalts-Temperatur $T_I$ auf einen bestimmten Sollwert einzustellen, insbesondere zu regeln).

Gemäß einem weiteren Aspekt der Erfindung wird ein Hausgerät (insbesondere eine Küchenmaschine) beschrieben. Das Hausgerät umfasst die in diesem Dokument beschriebene Vorrichtung, die eingerichtet ist, einen Schätzwert der Inhalts-Temperatur $T_I$ des Inhalts des Behälters zu ermitteln. Des Weiteren umfasst das Hausgerät eine Steuereinheit (z.B. kombiniert mit der Recheneinheit der Vorrichtung), die eingerichtet ist, das Hausgerät in Abhängigkeit von dem ermittelten Schätzwert der Inhalts-Temperatur $T_I$ zu betreiben. So kann ein präziser Betrieb eines Hausgeräts (insbesondere eines Haushaltsgeräts, etwa eines Ofens, einer Küchenmaschine, eines Kühlschranks, einer Waschmaschine, einer Spülmaschine, und/oder eines Trockners) ermöglicht werden.

Das Hausgerät (insbesondere die Küchenmaschine) kann eine Temperierungseinheit (z.B. ein Heizelement) umfassen, die eingerichtet ist, den Behälter zu temperieren, insbesondere zu kühlen oder zu erwärmen. Die Steuereinheit kann eingerichtet sein, die Temperierungseinheit in Abhängigkeit von dem ermittelten Schätzwert der Inhalts-Temperatur $T_I$ zu betreiben, insbesondere um einen Istwert der Inhalts-Temperatur $T_I$ auf einen Sollwert einzustellen (z.B. zu regeln). So kann z.B. eine präzise Temperierung eines Nahrungsmittels (etwa einer Flüssigkeit) in einer Küchenmaschine bewirkt werden, um die Qualität des hergestellten Nahrungsmittels zu erhöhen.

Gemäß einem weiteren Aspekt der Erfindung wird ein Verfahren zur Ermittlung eines Schätzwertes der Inhalts-Temperatur $T_I$ des Inhalts eines Behälters beschrieben. Das Verfahren kann durch eine Recheneinheit bzw. Steuereinheit ausgeführt werden. Das Verfahren umfasst das Erfassen und/oder Ermitteln von Sensordaten in Bezug auf die Wand-Temperatur Tw der Behälter-Wand des Behälters 104 mittels eines Infrarot-Sensors. Des Weiteren umfasst das Verfahren das Ermitteln des Schätzwertes der Inhalts-Temperatur $T_I$ des Inhalts des Behälters auf Basis der Sensordaten und auf Basis von Korrekturdaten.

Es ist zu beachten, dass jegliche Aspekte des in diesem Dokument beschriebenen Verfahrens und/oder des beschriebenen Hausgeräts und/oder der beschriebenen Vorrichtung in vielfältiger Weise miteinander kombiniert werden können. Insbesondere können die Merkmale der Patentansprüche in vielfältiger Weise miteinander kombiniert werden.

Im Weiteren wird die Erfindung anhand von in der beigefügten Zeichnung dargestellten Ausführungsbeispielen näher beschrieben. Dabei zeigen

Figur 1a ein Blockdiagramm einer Küchenmaschine als Beispiel für ein Hausgerät;
Figur 1b eine Küchenmaschine in einer perspektivischen Ansicht;
Figur 1c die Basis einer Küchenmaschine ohne Behälter;
Figur 2 eine beispielhafte Vorrichtung zur Ermittlung des Schätzwertes der Inhalts-Temperatur eines Behälters;
Figur 3a einen Zusammenhang zwischen der Wand-Temperatur des Behälters, der gemessenen Sensor-Temperatur eines IR Sensors und der Inhalts-Temperatur des Inhalts des Behälters;
Figur 3b beispielhafte Korrekturdaten zur Korrektur der gemessenen Temperatur eines IR Sensors; und
Figur 4 ein Ablaufdiagramm eines beispielhaften Verfahrens zur Ermittlung der Temperatur des Inhalts eines Behälters.

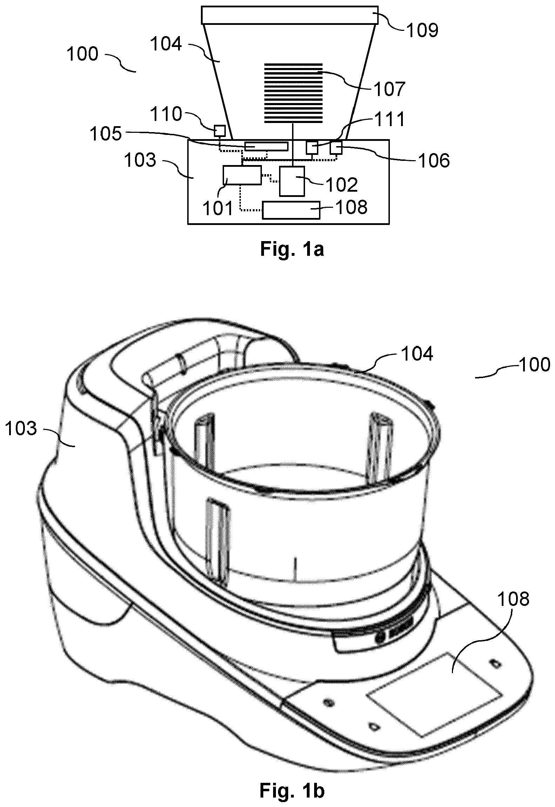

Wie eingangs dargelegt, befasst sich das vorliegende Dokument damit, die Temperatur des Inhalts eines Behälters in effizienter und präziser Weise zu ermitteln. In diesem Zusammenhang zeigt Fig. 1a eine beispielhafte Küchenmaschine 100 (als Beispiel für ein Hausgerät). Die in Fig. 1a dargestellte Küchenmaschine 100 umfasst einen Behälter 104, der auf einer Basis 103 der Küchenmaschine 100 angeordnet ist und in dem Zutaten für ein herzustellendes Nahrungsmittel verarbeitet werden können, z.B. mittels eines Werkzeugs bzw. Einsatzes 107, das bzw. der ggf. durch einen Motor 102 angetrieben wird. Dabei können ggf. unterschiedliche Werkzeuge 107 (z.B. ein Messer, ein Knethaken oder ein Besen) an dem Motor 102 montiert werden. Die Küchenmaschine 100 kann eingerichtet sein, den Behälter 104 mittels einer Temperierungseinheit 105 zu temperieren, z.B. zu kühlen oder zu erwärmen.

Des Weiteren kann die Küchenmaschine 100 ein oder mehrere Sensoren 106, 111 umfassen, die eingerichtet sind, Sensordaten in Bezug auf die Küchenmaschine 100 (insbesondere in Bezug auf einen Zustand der Küchenmaschine 100) und/oder in Bezug auf das herzustellende Nahrungsmittel zu erfassen. Ein beispielhafter Sensor ist ein Temperatursensor 111, der eingerichtet ist, Temperaturdaten in Bezug auf die Temperatur des Behälters 104 und/oder des darin enthaltenen Nahrungsmittels zu erfassen. Der Temperatursensor 111 kann einen temperaturabhängigen Messwiderstand umfassen. Ein weiterer beispielhafter Sensor 106 ist ein Gewichtssensor bzw. eine Waage, der bzw. die eingerichtet ist, Gewichtsdaten in Bezug auf das Gewicht des Behälters 104 und/oder des darin enthaltenen Nahrungsmittels zu erfassen.

Außerdem kann die Küchenmaschine 100 eine Benutzerschnittstelle 108 umfassen, die es einem Nutzer ermöglicht, Steuereingaben an die Küchenmaschine 100 zu tätigen (z.B. über ein oder mehrere Knöpfe), und/oder die es der Küchenmaschine 100 ermöglicht, Rückmeldungen an einen Nutzer der Küchenmaschine 100 auszugeben (z.B. über einen Bildschirm und/oder über eine Anzeige). Insbesondere kann die Benutzerschnittstelle 108 dazu genutzt werden, Information in Bezug auf Arbeitsschritte eines Rezeptes zur Herstellung eines bestimmten Nahrungsmittels an einen Nutzer auszugeben.

Des Weiteren umfasst die Küchenmaschine 100 eine Steuereinheit 101, die eingerichtet sein kann, Rezeptdaten für ein Rezept zur Herstellung eines bestimmten Nahrungsmittels zu ermitteln (z.B. aus einer Speichereinheit der Küchenmaschine 100 auszulesen oder von einer Datenbank herunterzuladen). Ferner kann die Steuereinheit 101 eingerichtet sein, die Küchenmaschine 100 zumindest teilweise automatisch in Abhängigkeit von den Rezeptdaten zu betreiben, um den Nutzer bei der Herstellung des bestimmten Nahrungsmittels zu unterstützen.

Die Küchenmaschine 100 kann einen Deckel 109 zum Abdecken des Behälters 104 aufweisen. Dabei kann der Deckel 109 ggf. mittels einer Riegelvorrichtung (nicht dargestellt) verriegelt werden, um bei Bedarf den Zugang zu dem Behälter 104 zu unterbinden.

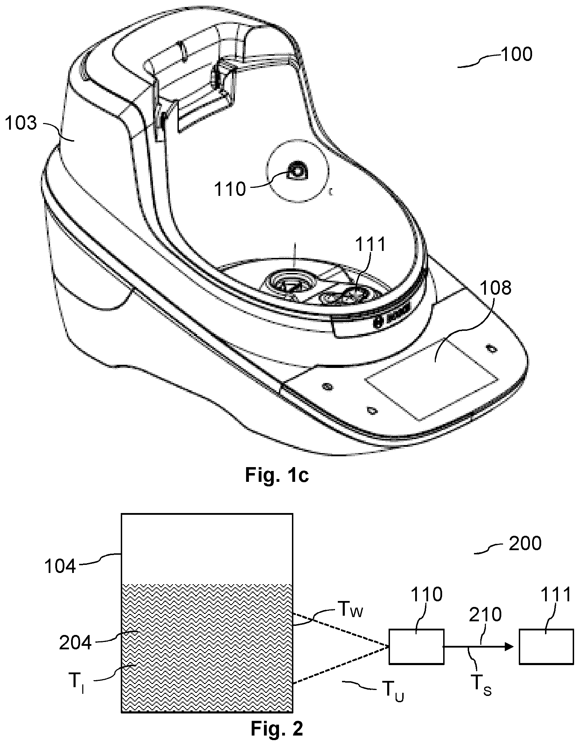

Fig. 1b zeigt eine beispielhafte Küchenmaschine 100 in einer perspektivischen Ansicht. Fig. 1c zeigt die Basis 103 einer beispielhaften Küchenmaschine 100 ohne Behälter 104. Die Küchenmaschine 100 umfasst einen Infrarot (IR)-Sensor 110, der eingerichtet ist, Sensordaten in Bezug auf die Oberfläche bzw. die Wand des Behälters 104 zu erfassen. Der IR-Sensor 110 kann innerhalb der Basis 103 der Küchenmaschine 100 angeordnet und auf den Ort des (entnehmbaren) Behälters 104 gerichtet sein. Der IR-Sensor 110 ist eingerichtet, die von einer Oberfläche abgestrahlte (elektromagnetische) Strahlung im Infrarot-Bereich zu erfassen. Insbesondere kann dabei die Intensität der Strahlung erfasst werden. Auf Basis der erfassten Intensität der Strahlung kann auf die Temperatur der Oberfläche bzw. der Wand des Behälters 104 geschlossen werden.

Fig. 2 zeigt eine Vorrichtung 200, z.B. einen Ausschnitt der Küchenmaschine 100, mit dem Behälter 104 und dem außerhalb des Behälters 104 angeordneten IR-Sensors 110. Der IR-Sensor 110 ist eingerichtet, Sensordaten 210 in Bezug auf die Temperatur des Behälters 104 und/oder des in dem Behälter 104 angeordneten Inhalts 204. Der Inhalt 204 in dem Behälter 104 weist eine Inhalts-Temperatur $T_I$ auf, die Wand des Behälters 104 weist eine Wand-Temperatur Tw auf und das Umfeld um den Behälter 104 weist eine Umfeld-Temperatur Tu auf. Die durch die Sensordaten 210 angezeigte Sensor-Temperatur Ts hängt typischerweise von der Inhalts-Temperatur $T_I$, der Wand-Temperatur Tw und/oder der Umfeld-Temperatur Tu ab. Andererseits kann z.B. die Wand-Temperatur Tw auf Basis der durch die Sensordaten 210 angezeigten Sensor-Temperatur Ts und der Umfeld-Temperatur Tu ermittelt werden, z.B. unter Verwendung des Stefan-Boltzmann-Gesetzes durch die Gleichung

$$T_{target\ surface} = \sqrt[4]{\frac{T_{raw\ sensor}^4 - (1-\varepsilon) \cdot T_{ambient}^4}{\varepsilon}}$$

wobei $T_{target}$ surface die Wand-Temperatur $T_W$ ist, wobei $T_{raw\ sensor}$ die Sensor-Temperatur $T_S$ ist, wobei $T_{ambient}$ die Umfeld-Temperatur Tu ist, und wobei $\varepsilon$ der Emissionsgrad der Wand des Behälters 104 ist. Die o.g. Gleichung ermöglicht es jedoch nicht, auf Basis der durch die Sensordaten 210 angezeigten Sensor-Temperatur Ts die Inhalts-Temperatur $T_I$ des Inhalts 204 des Behälters 104 zu ermitteln.

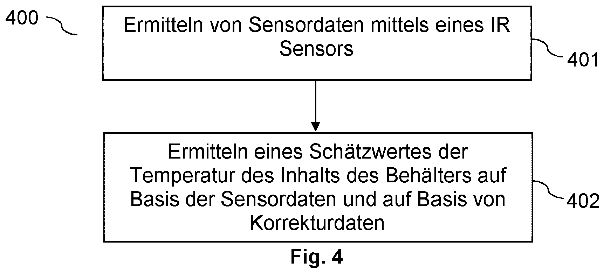

Fig. 4a zeigt entsprechende zeitliche Verläufe der Sensor-Temperatur Ts, der Inhalts-Temperatur $T_I$ und der Wand-Temperatur Tw (bei sich mit der Zeit t verändernden Temperaturen). Mittels der o.g. Formel kann aus Basis des (durch die Sensordaten 210 angezeigten) Wertes der Sensor-Temperatur Ts relativ präzise ein Schätzwert der Wand-Temperatur Tw ermittelt werden. Die Wand-Temperatur Tw entspricht jedoch typischerweise nicht der Inhalts-Temperatur $T_I$. Der Schätzwert der Inhalts-Temperatur $T_I$ kann jedoch präzise ermittelt werden, wenn in der o.g. Formel der Emissionsgrad der Wand des Behälters 104 angepasst, insbesondere reduziert, wird. Als Folge daraus kann ein relativ präziser Schätzwert der Inhalts-Temperatur $T_I$ des Inhalts 204 des Behälters 104 ermittelt werden.

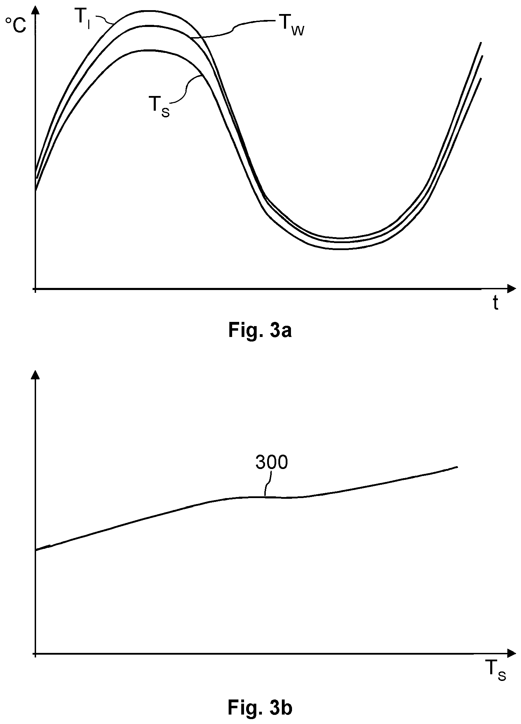

Der Emissionsgrad des Behälters 104 kann insbesondere mittels eines Korrekturwertes bzw. Korrekturfaktors 300 (allgemein als Korrekturdaten bezeichnet) korrigiert werden (siehe Fig. 3b). Der Korrekturfaktor kann dabei ggf. von der Sensor-Temperatur Ts abhängen. Alternativ kann der Korrekturfaktor für unterschiedliche Sensor-Temperaturen Ts (z.B. in einem bestimmten Temperatur-Bereich) konstant sein.

Der Korrekturfaktor 300 kann im Vorfeld experimentell ermittelt werden. Beispielsweise kann die Inhalts-Temperatur $T_I$ (wie in Fig. 3a dargestellt) variiert werden, und es kann für unterschiedliche Inhalts-Temperaturen $T_I$ jeweils die durch die Sensordaten 210 angezeigte Sensor-Temperatur $T_S$ erfasst werden. Es kann dann ein Korrekturfaktor bzw. Korrekturwert 300 ermittelt werden, durch den die (quadratische oder absolute) Differenz zwischen dem Schätzwert der Inhalts-Temperatur $T_I$ und dem tatsächlichen Wert der Inhalts-Temperatur $T_I$ (ggf. im Mittel) reduziert, insbesondere minimiert, wird.

Der Korrekturfaktor bzw. Korrekturwert 300 kann von dem Typ des Inhalts 204 in dem Behälter 104 abhängen. Insbesondere können für unterschiedliche Typen von Inhalt 204 in dem Behälter 104 experimentell unterschiedliche Korrekturfaktoren 300 ermittelt werden.

Die Steuereinheit 101 einer Küchenmaschine 100 kann eingerichtet sein, auf Basis der Sensordaten 210 des IR-Sensors 110 und auf Basis des (temperatur- und/oder inhaltsabhängigen) Korrekturwertes 300 den Schätzwert der Inhalts-Temperatur $T_I$ des Inhalts 204 in dem Behälter 104 zu ermitteln. Die Temperierung des Behälters 104 (durch die Temperierungseinheit 105) kann dann in Abhängigkeit von dem ermittelten Schätzwert der Inhalts-Temperatur $T_I$ erfolgen. So kann ein präziser Betrieb einer Küchenmaschine 100 ermöglicht werden.

Fig. 4 zeigt ein Ablaufdiagramm eines beispielhaften Verfahrens 400 zur Ermittlung eines Schätzwertes der Inhalts-Temperatur $T_I$ des Inhalts 204 eines Behälters 104. Das Verfahren 400 kann z.B. von einem Hausgerät 100, insbesondere von einer Küchenmaschine, ausgeführt werden. Das Verfahren 400 umfasst das Erfassen und/oder das Ermitteln 401 von Sensordaten 210 in Bezug auf die Wand-Temperatur $T_W$ der Behälter-Wand des Behälters 104 mittels eines Infrarot-Sensors 110 (der auf die Behälter-Wand gerichtet ist).

Des Weiteren umfasst das Verfahren 400 das Ermitteln 402 des Schätzwertes der Inhalts-Temperatur $T_I$ des Inhalts 204 des Behälters 104 auf Basis der Sensordaten 210 und unter Berücksichtigung von (experimentell ermittelten) Korrekturdaten 300. Die Korrekturdaten 300 können dabei zumindest einen Korrekturwert anzeigen, mit dem der Emissionsgrad der Behälter-Wand des Behälters 104 angepasst werden kann, um einen präzisen Schätzwert der Inhalts-Temperatur $T_I$ ermitteln zu können.

Die vorliegende Erfindung ist nicht auf die gezeigten Ausführungsbeispiele beschränkt. Insbesondere ist zu beachten, dass die Beschreibung und die Figuren nur das Prinzip der vorgeschlagenen Vorrichtung und/oder des vorgeschlagenen Verfahrens veranschaulichen sollen.

**Patentansprüche**

1. Vorrichtung (200) zur Ermittlung eines Schätzwertes der Inhalts-Temperatur ($T_I$) des Inhalts (204) eines Behälters (104) eines Hausgeräts; wobei die Vorrichtung (200) umfasst,

   - den Behälter (104) mit einer den Inhalt (204) zumindest teilweise umschließenden Behälter-Wand;
   - einen Infrarot, kurz IR, Sensor (110), der auf die Behälter-Wand gerichtet ist, und der eingerichtet ist, Sensordaten (210) in Bezug auf eine Wand-Temperatur ($T_W$) der Behälter-Wand zu erfassen; und
   - eine Recheneinheit (101), die eingerichtet ist,

      - einen Typ des Inhalts (204) des Behälters (104) zu ermitteln;
      - auf Basis des ermittelten Typs des Inhalts (204) einen Korrekturwert aus Korrekturdaten (300) zu ermitteln; wobei die Korrekturdaten (300) für unterschiedliche Typen von Inhalten (204) des Behälters (104) unterschiedliche Korrekturwerte anzeigen; und
      - anhand der Sensordaten (210) und anhand des ermitteln Korrekturwertes den Schätzwert der Inhalts-Temperatur ($T_I$) des Inhalts (204) des Behälters (104) zu ermitteln.

2. Vorrichtung (200) gemäß Anspruch 1, wobei die Recheneinheit (101) eingerichtet ist,

   - einen Emissionsgrad der Behälter-Wand anhand der Korrekturdaten (300) anzupassen, um einen angepassten Emissionsgrad zu ermitteln; und
   - den Schätzwert der Inhalts-Temperatur ($T_I$) anhand des angepassten Emissionsgrades zu ermitteln.

3. Vorrichtung (200) gemäß Anspruch 2, wobei die Recheneinheit (101) eingerichtet ist,

   - den Schätzwert der Inhalts-Temperatur ($T_I$) auf Basis des Berechnungs-Terms

$$\sqrt[4]{\frac{T_{raw\ sensor}^4 - (1-\varepsilon) \cdot T_{ambient}^4}{\varepsilon}}$$

   zu ermitteln; wobei $T_{raw\ sensor}$ eine durch die Sensordaten (210) angezeigte Sensor-Temperatur ($T_S$) ist, wobei $T_{ambient}$ eine Umfeld-Temperatur ($T_U$) einer Umgebung des Behälters (104) ist, und wobei $\varepsilon$ der angepasste Emissionsgrad ist.

4. Vorrichtung (200) gemäß Anspruch 3, wobei der Schätzwert der Inhalts-Temperatur ($T_I$) dem Wert des Berechnungs-Terms entspricht.

5. Vorrichtung (200) gemäß einem der Ansprüche 2 bis 4, wobei

   - die Korrekturdaten (300) einen Korrekturwert umfassen; und
   - die Recheneinheit (101) eingerichtet ist, den Emissionsgrad der Behälter-Wand mit dem Korrekturwert zu verschieben und/oder zu skalieren.

6. Vorrichtung (200) gemäß einem der vorhergehenden Ansprüche, wobei die Recheneinheit (101) eingerichtet ist,

   - einen Wert einer Umfeld-Temperatur ($T_U$) einer Umgebung des Behälters (104) zu ermitteln; und
   - den Schätzwert der Inhalts-Temperatur ($T_I$) auf Basis des Wertes der Umfeld-Temperatur ($T_U$) zu ermitteln.

7. Vorrichtung (200) gemäß einem der vorhergehenden Ansprüche, wobei

   - die Korrekturdaten (300) experimentell im Vorfeld ermittelt wurden; und/oder
   - die Korrekturdaten (300) auf einer Speichereinheit der Vorrichtung (200) gespeichert sind.

8. Vorrichtung (200) gemäß einem der vorhergehenden Ansprüche, wobei

   - die Korrekturdaten (300) für unterschiedliche Werte einer Sensor-Temperatur ($T_S$) unterschiedliche Korrekturwerte anzeigen; und
- die Recheneinheit (101) eingerichtet ist,

- auf Basis der Sensordaten (210) einen Wert der Sensor-Temperatur ($T_S$) zu ermitteln; und
- auf Basis des ermittelten Wertes der Sensor-Temperatur ($T_S$) den Korrekturwert aus den Korrekturdaten (300) zu ermitteln, mit dem der Schätzwert der Inhalts-Temperatur ($T_I$) zu ermitteln ist.

9. Vorrichtung (200) gemäß einem der vorhergehenden Ansprüche, wobei der IR-Sensor außerhalb des Behälters (104) angeordnet ist.

10. Vorrichtung (200) gemäß einem der vorhergehenden Ansprüche, wobei der IR-Sensor eingerichtet ist, Sensordaten (210) in Bezug auf eine Intensität von Strahlung im Infrarot-Spektralbereich zu erfassen, die von der Behälter-Wand ausgeht.

11. Hausgerät (100), das umfasst,

- die Vorrichtung (200) gemäß einem der vorhergehenden Ansprüche, die eingerichtet ist, einen Schätzwert der Inhalts-Temperatur ($T_I$) des Inhalts (204) des Behälters (104) zu ermitteln; und
- eine Steuereinheit (101), die eingerichtet ist, das Hausgerät (100) in Abhängigkeit von dem ermittelten Schätzwert der Inhalts-Temperatur ($T_I$) zu betreiben.

12. Hausgerät (100) gemäß Anspruch 11, wobei

- das Hausgerät (100) eine Temperierungseinheit (105) umfasst, die eingerichtet ist, den Behälter (104) zu temperieren, insbesondere zu kühlen oder zu erwärmen; und
- die Steuereinheit (101) eingerichtet ist, die Temperierungseinheit (105) in Abhängigkeit von dem ermittelten Schätzwert der Inhalts-Temperatur ($T_I$) zu betreiben, insbesondere um einen Istwert der Inhalts-Temperatur ($T_I$) auf einen Sollwert einzustellen.

13. Verfahren (400) zur Ermittlung eines Schätzwertes der Inhalts-Temperatur ($T_I$) des Inhalts (204) eines Behälters (104) eines Hausgeräts;
wobei das Verfahren (400) umfasst,

- Erfassen (401) von Sensordaten (210) in Bezug auf eine Wand-Temperatur ($T_W$) einer Behälter-Wand des Behälters (104) mittels eines Infrarot-Sensors (110);
- Ermitteln eines Typs des Inhalts (204) des Behälters (104);
- Ermitteln, auf Basis des ermittelten Typs des Inhalts (204), eines Korrekturwertes aus Korrekturdaten (300); wobei die Korrekturdaten (300) für unterschiedliche Typen von Inhalten (204) des Behälters (104) unterschiedliche Korrekturwerte anzeigen; und
- Ermitteln (402) des Schätzwertes der Inhalts-Temperatur ($T_I$) des Inhalts (204) des Behälters (104) auf Basis der Sensordaten (210) und anhand des ermitteln Korrekturwertes.

**Claims**

1. Device (200) for determining an estimated value of the contents temperature ($T_I$) of the contents (204) of a container (104) of a household appliance; wherein the device (200) comprises

- the container (104) with a container wall which encloses the contents (204) at least partially;
- an infrared, in short IR, sensor (110), which is pointed at the container wall and is designed to acquire sensor data (210) in respect of a wall temperature ($T_W$) of the container wall; and
- a computing unit (101), which is designed,
- to determine a type of contents (204) of the container (104);
- to determine a correction value from correction data (300) on the basis of the determined type of contents (204); wherein the correction data (300) indicates different correction values for different types of contents (204) of the container (104); and
- to determine the estimated value of the contents temperature ($T_I$) of the contents (204) of the container (104) on the basis of the sensor data (210) and on the basis of the determined correction value.

**2.** Device (200) according to claim 1, wherein the computing unit (101) is designed,

- to adjust an emissivity of the container wall by means of the correction data (300) in order to determine an adjusted emissivity; and
- to determine the estimated value of the contents temperature (T$_I$) by means of the adjusted emissivity.

**3.** Device (200) according to claim 2, wherein the computing unit (101) is designed

- to determine the estimated value of the contents temperature (T$_I$) on the basis of the calculation term

$$4\sqrt{\frac{T_{raw\ sensor}^4 - (1 - \varepsilon) \cdot T_{ambient}^4}{\varepsilon}}$$

wherein T$_{raw\ sensor}$ is a sensor temperature (T$_S$) indicated by the sensor data (210), wherein T$_{ambient}$ is an environment temperature (T$_U$) of a surroundings of the container (104), and wherein $\varepsilon$ is the adjusted emissivity.

**4.** Device (200) according to claim 3, wherein the estimated value of the contents temperature (T$_I$) corresponds to the value of the calculation term.

**5.** Device (200) according to one of claims 2 to 4, wherein

- the correction data (300) comprises a correction value; and
- the computing unit (101) is designed to displace and/or scale the emissivity of the container wall with the correction value.

**6.** Device (200) according to one of the preceding claims, wherein the computing unit (101) is designed,

- to determine a value of an environment temperature (T$_U$) of a surroundings of the container (104); and
- to determine the estimated value of the contents temperature (T$_I$) on the basis of the value of the environmental temperature (T$_U$).

**7.** Device (200) according to one of the preceding claims, wherein

- the correction data (300) was determined experimentally beforehand; and/or
- the correction data (300) is stored on a storage unit of the device (200).

**8.** Device (200) according to one of the preceding claims, wherein

- the correction data (300) indicates correction values which are different for different values of a sensor temperature (T$_S$); and
- the computing unit (101) is designed,

  - on the basis of the sensor data (210), to determine a value of the sensor temperature (T$_S$); and
  - on the basis of the determined value of the sensor temperature (T$_S$), to determine the correction value from the correction data (300), with which the estimated value of the contents temperature (T$_I$) is to be determined.

**9.** Device (200) according to one of the preceding claims, wherein the IR sensor is arranged outside of the container (104).

**10.** Device (200) according to one of the preceding claims, wherein the IR sensor is designed to detect sensor data (210) in respect of an intensity of radiation in the infrared spectral range, which originates from the container wall.

**11.** Household appliance (100), which comprises,

- the device (200) according to one of the preceding claims, which is designed to determine an estimated value of the contents temperature ($T_I$) of the contents (204) of the container (104); and
- a control unit (101), which is designed to operate the household appliance (100) as a function of the determined estimated value of the contents temperature ($T_I$).

**12.** Household appliance (100) according to claim 11, wherein

- the household appliance (100) comprises a temperature control unit (105), which is designed to control the temperature of the container (104), in particular to cool or heat it up; and
- the control unit (101) is designed to operate the temperature control unit (105) as a function of the determined estimated value of the contents temperature ($T_I$), in particular in order to adjust an actual value of the contents temperature ($T_I$) to a target value.

**13.** Method (400) for determining an estimated value of the contents temperature ($T_I$) of the contents (204) of a container (104) of a household appliance;
wherein the method (400) comprises,

- detecting (401) sensor data (210) in respect of a wall temperature ($T_W$) of a container wall of the container (104) by means of an infrared sensor (110);
- determining a type of contents (204) of the container (104);
- determining, on the basis of the determined type of contents (204), a correction value from correction data (300); wherein the correction data (300) indicates different correction values for different types of contents (204) of the container (104),
- determining (402) the estimated value of the contents temperature ($T_I$) of the contents (204) of the container (104) on the basis of the sensor data (210) and by means of the determined correction value.

## Revendications

**1.** Dispositif (200) de détermination d'une valeur estimée de la température de contenu ($T_i$) du contenu (204) d'un récipient (104) d'un appareil ménager ;
dans lequel le dispositif (200) comprend,

- le récipient (104) avec une paroi de récipient entourant au moins partiellement le contenu (204) ;
- un capteur infrarouge (110), IR, qui est aligné sur la paroi de récipient, et qui est agencé pour détecter des données de capteurs (210) en rapport à une température de paroi ($T_W$) de la paroi de récipient ; et
- une unité de calcul (101) qui est conçue pour

- déterminer un type du contenu (204) du récipient (104) ;
- en se basant sur le type du contenu (204) déterminé, déterminer une valeur de correction à partir de données de correction (300) ; dans lequel les données de correction (300) affichent différentes valeurs de correction pour différents types de contenus (204) du récipient (104) ; et
- à l'aide des données de capteur (210) et à l'aide de la valeur de correction déterminée, déterminer la valeur estimée de la température de contenu ($T_i$) du contenu (204) du récipient (104).

**2.** Dispositif (200) selon la revendication 1, dans lequel l'unité de calcul (101) est agencée

- pour adapter un degré d'émission de la paroi de récipient à l'aide des données de correction (300) pour déterminer un degré d'émission adapté ; et
- déterminer la valeur estimée de la température de contenu ($T_i$) à l'aide du degré d'émission adapté.

**3.** Dispositif (200) selon la revendication 2, dans lequel l'unité de calcul (101) est agencée

- pour déterminer la température de contenu ($T_i$) en se basant sur l'expression de calcul ;

$$\sqrt[4]{\frac{T_{raw\ sensor}^4 - (1-\varepsilon) \cdot T_{ambient}^4}{\varepsilon}}$$

$T_{raw\ sensor}$ étant une température de capteur ($T_S$) affichée par les données de capteur (210), $T_{ambient}$ étant une température environnante ($T_U$) d'un environnement du récipient (104) et $\varepsilon$ étant le degré d'émission adapté.

4. Dispositif (200) selon la revendication 3, dans lequel la valeur estimée de la température de contenu ($T_i$) correspond à la valeur de l'expression de calcul.

5. Dispositif (200) selon l'une des revendications 2 à 4, dans lequel

   - les données de correction (300) comprennent une valeur de correction ; et
   - l'unité de calcul (101) est agencée pour repousser et/ou graduer le degré d'émission de la paroi de récipient avec la valeur de correction.

6. Dispositif (200) selon l'une des revendications précédentes, dans lequel l'unité de calcul (101) est agencée pour

   - déterminer une valeur d'une température environnante ($T_U$) d'un environnement du récipient (104) ; et
   - déterminer la valeur estimée de la température de contenu ($T_i$) en se basant sur la valeur de la température environnante (Tu).

7. Dispositif (200) selon l'une des revendications précédentes, dans lequel

   - les données de correction (300) ont été déterminées de manière expérimentale au préalable ; et/ou
   - les données de correction (300) sont enregistrées sur une unité de mémoire du dispositif (200).

8. Dispositif (200) selon l'une des revendications précédentes, dans lequel

   - les données de correction (300) affichent différentes valeurs de correction pour différentes valeurs d'une température de capteur ($T_S$) ; et
   - l'unité de calcul (101) est agencée pour
   - déterminer une valeur de température de capteur ($T_S$) en se basant sur les données de capteur (210) ; et
   - en se basant sur la valeur déterminée de température de capteur ($T_S$), déterminer à partir des données de correction (300) la valeur de correction avec laquelle la valeur estimée de la température de contenu ($T_i$) doit être déterminée.

9. Dispositif (200) selon l'une des revendications précédentes, dans lequel le capteur IR est disposé en-dehors du récipient (104).

10. Dispositif (200) selon l'une des revendications précédentes, dans lequel le capteur IR est agencé pour détecter des données de capteur (210) en rapport à une intensité de rayonnement dans la plage de spectre infrarouge qui part de la paroi du récipient.

11. Appareil ménager (100) qui comprend,

    - le dispositif (200) selon l'une des revendications précédentes qui est agencé pour déterminer une valeur estimée de la température de contenu ($T_i$) du contenu (204) du récipient (104) ; et
    - une unité de calcul (101) qui est agencée pour faire fonctionner l'appareil ménager (100) en fonction de la valeur estimée déterminée de la température de contenu ($T_i$).

12. Appareil ménager (100) selon la revendication 11, dans lequel

    - l'appareil ménager (100) comprend une unité de mise en température (105) qui est agencée pour mettre le récipient (104) en température, en particulier le refroidir ou le réchauffer ; et
    - l'unité de calcul (101) est agencée pour faire fonctionner l'unité de mise en température (105) en fonction de la valeur estimée déterminée de la température de contenu ($T_i$), en particulier pour régler une valeur réelle de la température de contenu ($T_i$) à une valeur de consigne.

13. Procédé de détermination d'une valeur estimée de la température de contenu ($T_i$) du contenu (204) d'un récipient (104) d'un appareil ménager ;
    dans lequel le procédé (400) comprend,

- la détection (401) de données de capteur (210) en rapport à une température de paroi (TW) d'une paroi de récipient du récipient (104) au moyen d'un capteur infrarouge (110) ;
- la détermination d'un type du contenu (204) du récipient (104) ;
- la détermination, sur la base du type du contenu (204) déterminé, d'une valeur de correction à partir de données de correction (300) ; dans lequel les données de correction (300) affichent différentes valeurs de correction pour différents types de contenus (204) du récipient (104) ; et
- la détermination (402) de la valeur estimée de la température de contenu ($T_i$) du contenu (204) du récipient (104) en se basant sur les données de capteur (210) et à l'aide de la valeur de correction déterminée.

**Fig. 1a**

**Fig. 1b**

**Fig. 1c**

**Fig. 2**

**Fig. 3a**

**Fig. 3b**

400 ⌇

| Ermitteln von Sensordaten mittels eines IR Sensors |
|---|

⌇ 401

| Ermitteln eines Schätzwertes der Temperatur des Inhalts des Behälters auf Basis der Sensordaten und auf Basis von Korrekturdaten |
|---|

⌇ 402

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2011249065 A
- JP 2011253781 A
- EP 3420864 A1